# EUROPÄISCHE PATENTSCHRIFT

(11) **EP 3 708 896 B1**
(45) Veröffentlichungstag und Bekanntmachung des Hinweises auf die Patenterteilung: **29.12.2021**
(21) Anmeldenummer: 20160706.6
(22) Anmeldetag: 03.03.2020
(51) Int. Cl.: F17C 1/06

(54) **GAS-TANK-SYSTEM, VERFAHREN ZUM BETREIBEN DES GAS-TANK-SYSTEMS UND ZUG MIT GAS-TANK-SYSTEM**
GAS TANK SYSTEM, METHOD FOR OPERATING THE GAS TANK SYSTEM AND TRAIN WITH GAS TANK SYSTEM
SYSTÈME DE RÉSERVOIR À GAZ, PROCÉDÉ DE FONCTIONNEMENT DU SYSTÈME DE RÉSERVOIR À GAZ ET TRAIN POURVU DE SYSTÈME DE RÉSERVOIR À GAZ

(30) Priorität: 11.03.2019 DE 102019203258
(43) Veröffentlichungstag der Anmeldung: 16.09.2020
(73) Patentinhaber: Siemens Mobility GmbH, 81739 München (DE)
(72) Erfinder: Hanebuth, Marc, 90482 Nürnberg (DE); Meltzer, Katharina, 91058 Erlangen (DE); Tremel, Alexander, 91096 Möhrendorf (DE)

(56) Entgegenhaltungen:
- DE-A1- 10 356 852
- DE-C- 688 949
- US-A1- 2007 000 561
- US-A1- 2018 259 124

## Beschreibung

Die Erfindung betrifft ein Gas-Tank-System, ein Verfahren zum Betreiben eines Gas-Tank-Systems sowie einen Zug mit einem Gas-Tank-System.

Ein großer Anteil der Zugstrecken in Europa ist nicht elektrifiziert. Diese Strecken werden heutzutage in der Regel mit Diesel-angetriebenen Zügen bedient. Nachteilig verursachen diese Züge Feinstaub, Stickoxide und lokale CO₂-Emissionen und belasten daher die Umwelt.

Züge, die mit Wasserstoff anstatt Diesel angetrieben werden, haben ein großes Potential den Zugverkehr umweltfreundlicher zu gestalten. Wasserstoff hat den Vorteil einer hohen Energiedichte verglichen mit Batterien in Batterie-betriebenen Zügen, so dass hohe Reichweiten erzielt werden können. Es gibt derzeit unterschiedliche Konzepte, was die Form angeht, in welcher der Wasserstoff an Bord der mobilen Anwendung gespeichert wird.

Ein besonders einfaches und somit robustes Konzept beruht auf gasförmigem komprimiertem Wasserstoff. Typische Druckniveaus für einen vollständig gefüllten Speichertank sind 350 bar und 700 bar, wobei sich diese Drücke auf eine Temperatur von 15 °C beziehen. Für gasförmigen Wasserstoff gibt es inzwischen sehr gut geeignete Drucktanks, die Wasserstoff bei 700 bar bei 15 °C und zeitweise bei 860 bar bei 80 °C speichern können. Sie sind weiterhin sehr leicht und zyklenstabil.

Es handelt sich hierbei um sogenannte Typ IV-Tanks. Sie bestehen aus einem innen liegenden dünnwandigen Kunststoff-Liner, der mit harzgetränkten Kohlefasern umwickelt ist. Der Liner sorgt für die Dichtheit und die Kohlefasern für die Druckstabilität. Für eine Nutzung des unter Druck gespeicherten Wasserstoffs z.B. in einer Brennstoffzelle muss er lediglich entspannt werden. Es sind also keine komplexen Verfahrensschritte nötig.

Es gibt aus der Automobilindustrie bereits Normen für die Befüllung von Wasserstoff-angetriebenen Fahrzeugen. Diese beruhen im Wesentlichen darauf, dass bei dem Befüllvorgang der Druck des von der Tankstelle angebotenen Wasserstoffs kontinuierlich erhöht wird, um so kontinuierlich Wasserstoff in den Tank zu pressen. Wegen der Kompression von bereits vorhandenem Wasserstoff tritt eine starke Wärmetönung auf, so dass die Temperaturen im Tank schnell über 80 °C steigen könnten. Temperaturen über 85 °C sind in der Automobilnorm jedoch nicht für diese Tanks erlaubt, manche Fabrikate schränken den erlaubten Temperaturbereich sogar noch weiter ein. Die Temperaturerhöhung ist in der ersten Phase der Betankung besonders stark, so dass durch eine langsam gewählte Tankgeschwindigkeit eine Überhitzung des Tanks wegen einer Wärmeabgabe über das Tankmaterial an die Umgebung verhindert wird. Die langsamen Tankgeschwindigkeiten sind jedoch aus wirtschaftlicher Sicht ein großer Nachteil für den Betrieb von Wasserstoff-betriebenen Flotten, da sie unter ungünstigen Umständen durchaus im Bereich einer Stunde liegen können.

Es gibt im Stand der Technik bereits Ansätze, die Tankzeit zu verkürzen. Beispielsweise kann gekühlter Wasserstoff getankt werden, um so den Enthalpieeintrag und somit die resultierenden Temperaturen zu verringern. Allerdings sind die MinimalTemperaturen für den getankten Wasserstoff typischerweise bei -40 °C limitiert. Bei noch niedrigeren Temperaturen wären Materialprobleme und ein unverhältnismäßig hoher Energieaufwand für die Kühlung die Folge. Selbst bei der Betankung von Wasserstoff mit einer Temperatur von -40 °C ist die Betankungszeit jedoch häufig wegen der Temperatur innerhalb des Tanks begrenzt.

Es gibt im Stand der Technik weitere Maßnahmen, um beim Tankvorgang die Temperatur im Tank möglichst niedrig zu halten bzw. ein möglichst schnelles Betanken zu realisieren. Zum Beispiel darf der innere Durchmesser der Rohrleitung am Übergabepunkt mit definierter Temperatur und Druck nicht zu gering sein, da wegen der kinetischen Energie des Wasserstoffs ein zusätzlicher Energieeintrag in das Tanksystem auftritt. Für den Fall von zu geringen Rohrdurchmessern kann also die Betankungszeit durch eine zu große Geschwindigkeit des Wasserstoffs limitiert sein.

Eine weitere Maßnahme ist es, die Rohrleitungen des Wasserstoffsystems, durch die die Betankung erfolgt, mit Dämmmaterial zu umgeben und sie so thermisch zu isolieren. Auf diese Weise wird verhindert, dass durch Wärmeeintrag gekühlter Wasserstoff (z.B. auf -40 °C) wieder erwärmt wird und so nicht wie gewünscht mit möglichst niedriger Temperatur das Innere des Tanks erreicht.

Doch selbst wenn die drei genannten Maßnahmen (Betankung mit gekühltem Wasserstoff, großer Rohrinnendurchmesser am Übergabepunkt und thermisch isolierte Betankungsleitungen) getroffen werden, kann die Betankungszeit nachteilig noch unnötig lang sein.

Beim Entnehmen des Gases wird dieses häufig entspannt, da bei typischen Anwendungen Drücke unterhalb von 350 bar, wie insbesondere einer Brennstoffzelle von 5 bar bis 20 bar, benötigt werden. Nachteilig erwärmt sich das Gas aufgrund des Joule-Thomson-Effektes dabei auf unerwünscht hohe Temperaturen.

DE 103 56 852 A1 offenbart einen Druckgasbehälter zur Speicherung von Wasserstoffgas in einem Fahrzeug für einen Brennstoffzellenmotor.

Es ist demnach Aufgabe der vorliegenden Erfindung, ein Gas-Tank-System für ein Fortbewegungsmittel, ein Verfahren zum Betreiben eines Gas-Tank-Systems und einen Zug mit einem Gas-Tank-System anzugeben, welches ein schnelles Betanken und Entladen des Tanks bei niedrigen Temperaturen ermöglicht.

Die Aufgabe wird erfindungsgemäß mit einem Gas-Tank-System gemäß Anspruch 1, einem Verfahren zum Betreiben eines Gas-Tank-Systems gemäß Anspruch 15 und einem Zug gemäß Anspruch 13 gelöst.

Das erfindungsgemäße Gas-Tank-System für den Einsatz in einem Fortbewegungsmittel umfasst eine gasdichte und druckstabile äußere Hülle. Darin ist wenigstens eine innere hitzebeständige Hülle angeordnet, innerhalb welcher das Gas gespeichert werden kann. Das Gas-Tank-System umfasst weiterhin einen Kanal, wobei der Kanal zwischen der äußeren und der inneren Hülle angeordnet ist und durch die innere und die äußere Hülle begrenzt wird. Die äußere Hülle weist einen Einlass zur Aufnahme des Gases in den Kanal auf. Die innere Hülle weist einen ersten Auslass zum Führen des Gases aus dem Kanal in die innere Hülle auf. Am ersten Auslass des Kanals ist eine Kühlvorrichtung angeordnet.

Das erfindungsgemäße Verfahren zum Betreiben eines Gas-Tank-Systems umfasst mehrere Schritte. Zunächst wird ein Gas-Tank-System für den Einsatz in einem Fortbewegungsmittel umfassend eine gasdichte äußere Hülle, wenigstens eine darin angeordnete innere hitzebeständige Hülle innerhalb welcher das Gas gespeichert werden kann, ein Kanal, wobei der Kanal zwischen der äußeren und der inneren Hülle angeordnet ist und durch die innere und die äußere Hülle begrenzt wird und wobei die äußere Hülle einen Einlass zur Aufnahme des Gases in den Kanal und die innere Hülle einen ersten Auslass zum Führen des Gases in die innere Hülle aufweist, wobei am ersten Auslass des Kanals eine Kühlvorrichtung angeordnet ist, bereitgestellt. Das Gas wird in die innere Hülle durch den Kanal geführt. Aufgrund des steigenden Druckes erwärmt sich das Gas in der inneren Hülle. In der inneren Hülle wird das Gas anschließend gespeichert. Das Gas wird dann durch den ersten Auslass entnommen, wobei das Gas in der Kühlvorrichtung abgekühlt wird.

Vorteilhaft wird das Gas bei einem Betankungsvorgang durch den Kanal in das Innere der inneren Hülle, in anderen Worten das Innere des Tanks, geführt. Während das Gas durch den Kanal strömt erhöht sich der Druck nicht. Daher bleibt im Kanal die Temperatur des Gases nahezu konstant. Die äußere Hülle, die druckstabil und gasdicht, aber hitzeempfindlich ist, wird so vorteilhaft keinen hohen Temperaturen ausgesetzt. Der Druck und somit auch die Temperatur erhöht sich erst im Inneren der inneren Hülle. Diese umfasst ein hitzestabiles Material. Somit können vorteilhaft schnelle Betankungen durchgeführt werden, da der Tank aufgrund der wenigstens zwei äußeren Hüllen höheren Temperaturen standhält. Wird das Gas nach dem Speichern aus dem Innenraum der inneren Hülle entnommen, so wird es während der Entnahme an der Kühlvorrichtung gekühlt.

In einer vorteilhaften Ausgestaltung und Weiterbildung der Erfindung ist der Gas-Tank ein Wasserstoff-Tank. Für Wasserstoff gelten hinsichtlich der Dichtheit und der mechanischen Stabilität hohe Anforderungen. Diese müssen auch beim Befüllen des Tanks und beim Entleeren des Tanks eingehalten werden. Daher müssen diese Eigenschaften auch bei erhöhtem Druck oder hohen Temperaturen erhalten bleiben. Vorteilhaft sind in dem erfindungsgemäßen Gas-Tank-System die mechanische und dichte äußere Hülle von einer hitzebeständigen inneren Hülle räumlich getrennt. Der eintretende Wasserstoff erhitzt sich erst in der inneren Hülle, da dort der Druck ansteigt. Somit eignet sich das Wasserstoff-Tank-System für ein schnelles und sicheres Speichern und Entleeren des Wasserstoffspeichers.

Der Druck in dem Wasserstofftank beträgt insbesondere im Wesentlichen 350 bar oder im Wesentlichen 700 bar. Beide Drücke beziehen sich auf eine Wasserstoff-Temperatur von 15 °C.

In einer weiteren vorteilhaften Ausgestaltung und Weiterbildung der Erfindung ist die innere hitzebeständige Hülle aus einem ersten Material umfassend ein Fluorpolymer und/oder ein Kompositpolymer ausgestaltet. Hitzebeständig meint hier, dass die innere Hülle Temperaturen von bis zu 150 °C, insbesondere von 120 °C oder 100 °C, standhält. Das erste Material weist vorteilhaft folgende Merkmale auf: Es ist temperaturbeständig und weist eine niedrige Wärmeleitfähigkeit auf. Wasserstoff löst sich schlecht in dem ersten Material, damit es nicht versprödet. Das erste Material kann porös sein, da die Dichtigkeit des Tanks über die äußere Hülle erreicht wird.

In einer weiteren vorteilhaften Ausgestaltung und Weiterbildung der Erfindung weist die äußere Hülle eine Ummantelung umfassend Kunststoff und ein diese Ummantelung umgebendes Fasermaterial auf. Die Ummantelung ist gasdicht. Das die Ummantelung umgebende Fasermaterial ist mechanisch stabil. Dieser Aufbau ist auch als Tank-IV-Typ bekannt. Diese Tanks sind typischerweise rotationssymmetrisch, insbesondere im Wesentlichen zylinderförmig. Vorteilhaft können Wasserstoffspeicher des Typs IV mit der zusätzlichen inneren Hülle dahingehend verbessert werden, dass steigende Temperaturen im Inneren des Tanks aufgrund des Druckanstiegs während des Betankungsvorgangs von der äußeren Hülle ferngehalten werden. Somit sind vorteilhaft kürzere Betankungszeiten möglich.

In einer weiteren vorteilhaften Ausgestaltung und Weiterbildung der Erfindung weist die äußere Hülle einen zweiten Auslass auf. Dieser kann der Entnahme des Gases aus dem Kanal und/oder der Wärmeabfuhr aus der Kühlvorrichtung dienen. Es wird also nicht der Einlass in den Kanal zur Entnahme des Gases verwendet. Besonders vorteilhaft ist dann der Einlass thermisch isoliert. Vorteilhaft wird so ein Wärmeeintrag aus der Umgebung in den Tank möglichst gering gehalten.

In einer weiteren vorteilhaften Ausgestaltung und Weiterbildung der Erfindung ist der zweite Auslass gegenüber dem Einlass der äußeren Hülle angeordnet. Dieser zweite Auslass ist derart ausgelegt, dass eine möglichst gute Wärmeabfuhr an die Umgebung möglich ist. Er kann also insbesondere in massiver Bauweise ausgestaltet sein. Besonders bevorzugt umfasst der zweite Auslass ein wärmeleitendes Material. Das Gas, insbesondere Wasserstoff, wird typischerweise bei Drücken unterhalb des Druckniveaus im Tankinneren eingesetzt. Während des Entleerens des Tanks erwärmt sich dann das Gas, insbesondere der Wasserstoff, aufgrund des Joule-Thomson-Effekts signifikant. Vorteilhaft wird durch eine gute Wärmeabfuhr somit erreicht, dass die Nutzung des Wasserstoffs durch insbesondere ein Fortbewegungsmittel unverzüglich nach dem Betanken beginnen kann, selbst dann, wenn die Temperaturen im Tank noch sehr hoch sein können. Besonders vorteilhaft ist es, wenn die Kühlvorrichtung dann ebenfalls mit dem zweiten Auslass verbunden ist und somit den ersten und den zweiten Auslass aus dem Kanal kühlt.

In einer weiteren vorteilhaften Ausgestaltung und Weiterbildung der Erfindung sind der Einlass und der erste Auslass in axialer Richtung der Hüllen gegenüberliegend angeordnet. In anderen Worten heißt das, dass das Gas, insbesondere der Wasserstoff, durch den Einlass in den Kanal einfließt, anschließend bis zum entgegengesetzten Ende des Kanals strömt und dort durch den ersten Auslass in die innere Hülle strömt. In der inneren Hülle steigt dann die Temperatur aufgrund der Druckerhöhung des Gases. Vorteilhaft wird das Gas in der inneren Hülle mittels des einfließenden Gases in dem Kanal gekühlt. Durch die maximal lange Strecke durch den Kanal ist dieser Kühleffekt vorteilhaft besonders ausgeprägt. Somit können sehr kurze Betankungszeiten erreicht werden.

In einer weiteren vorteilhaften Ausgestaltung und Weiterbildung der Erfindung sind der Einlass und der zweite Auslass auf derselben Seite der äußeren und der inneren Hülle angeordnet. Der erste Auslass mit der Kühlvorrichtung ist gegenüberliegend angeordnet. In dieser Ausführung wird das Gas durch den Kanal und den ersten Auslass in das Innere des Tanks geführt. Das Gas wird dann durch den zweiten Auslass aus dem Tank hinausgeführt. Vorteilhaft strömt das Gas bei einem Befüllungsvorgang durch die maximale Kanallänge.

In einer weiteren vorteilhaften Ausgestaltung und Weiterbildung der Erfindung ist die die Kühlvorrichtung als wärmeleitender Stab oder als ein Wärmerohr (engl.: "Heatpipe") ausgestaltet. Der wärmeleitende Stab umfasst insbesondere Kupfer. Ein Kupferstab besitzt vorteilhaft eine sehr gute Wärmeleitfähigkeit. Ein Wärmerohr, insbesondere mit einer Füllung umfassend Wasser, Ethanol oder ein Kältemittel, transportiert die Wärme ebenfalls aus den Tankinneren in die Umgebung. Die Füllung steht im thermischen Kontakt mit dem Inneren des Tanks, nimmt dort Wärme auf und verdampft. An anderer Stelle steht das Wärmerohr im thermischen Kontakt mit der Umgebung und gibt dort Wärme ab und die Füllung kondensiert. Besonders vorteilhaft ist es, wenn der Kupferstab oder das Wärmerohr mit den ersten und dem zweiten Auslass verbunden sind. Vorteilhaft kann das Gas auch bei Entnahme aus dem Tank gekühlt werden. Außerdem kann die Kühlvorrichtung in dem zweiten Auslass angeordnet sein, so dass keine zusätzliche eine Öffnung in der äußeren Hülle erforderlich ist, um die Kühlvorrichtung mit der Umgebung zu verbinden. Es ist ebenso denkbar, dass der zweite Auslass ausschließlich der Wärmeabfuhr dient und der Einlass zur Entnahme aus dem Kanal verwendet wird.

In einer weiteren vorteilhaften Ausgestaltung und Weiterbildung der Erfindung weist die Kühlvorrichtung Rippen auf. Diese Rippen können außen an der Kühlvorrichtung zur Oberflächenvergrößerung angeordnet sein. Sie können auch im Inneren der Kühlvorrichtung als Strömungselemente und zur Oberflächenvergrößerung angeordnet sein. Vorteilhafterweise erhöhen diese die Effizienz der Kühlvorrichtung und machen daher insbesondere auch kürzere Betankungszeiten möglich.

In einer weiteren vorteilhaften Ausgestaltung und Weiterbildung der Erfindung umfasst das Gas-Tank-System wenigstens zwei innere Hüllen und wenigstens zwei sich zwischen den Hüllen ausbildenden Kanäle.

Eine weitere vorteilhafte Ausgestaltung betrifft einen wasserstoffbetriebenen Zug mit dem erfindungsgemäßen Gas-Tank-System. Vorteilhaft ist das erfindungsgemäße Gas-Tank-System sowohl sicher bei hohen Drücken sowie bei mechanischer Beanspruchung, was eine Voraussetzungen für den Einsatz in einem Zug ist. Weiterhin ermöglicht der Aufbau des Tanks mit der inneren und der äußeren Hülle ein schnelles Betanken des Zuges, wobei der Tank hitzestabil bleibt.

In einer vorteilhaften Ausgestaltung ist eine Kühlvorrichtung des Gas-Tank-Systems, insbesondere eine wärmeleitende Komponente, fest mit dem Zug verbunden. Somit kann das sichere Speichern des Wasserstoffs bei schnellen Betankungsvorgängen insbesondere in einem Zug gewährleistet werden, da insbesondere die Kompressionswärme, die zu Beginn des Betankungsvorgangs entsteht, aus dem Gas-Tank-System herausgeführt wird und insbesondere über ein massives wärmeleitendes Bauteil des Zuges abgeleitet werden kann.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
Figur 1 ein Gas-Tank-System mit einer äußeren und einer inneren Hülle und einer Kühlvorrichtung;
Figur 2 ein Gas-Tank-System mit einer äußeren und einer inneren Hülle mit einer mit einem Fortbewegungsmittel verbundenen Kühlvorrichtung;
Figur 3 ein Querschnitt eines Gas-Tank-Systems mit einer äußeren und einer inneren Hülle,
Figur 4 ein Querschnitt eines Gas-Tank-Systems mit einer äußeren und zwei inneren Hüllen.

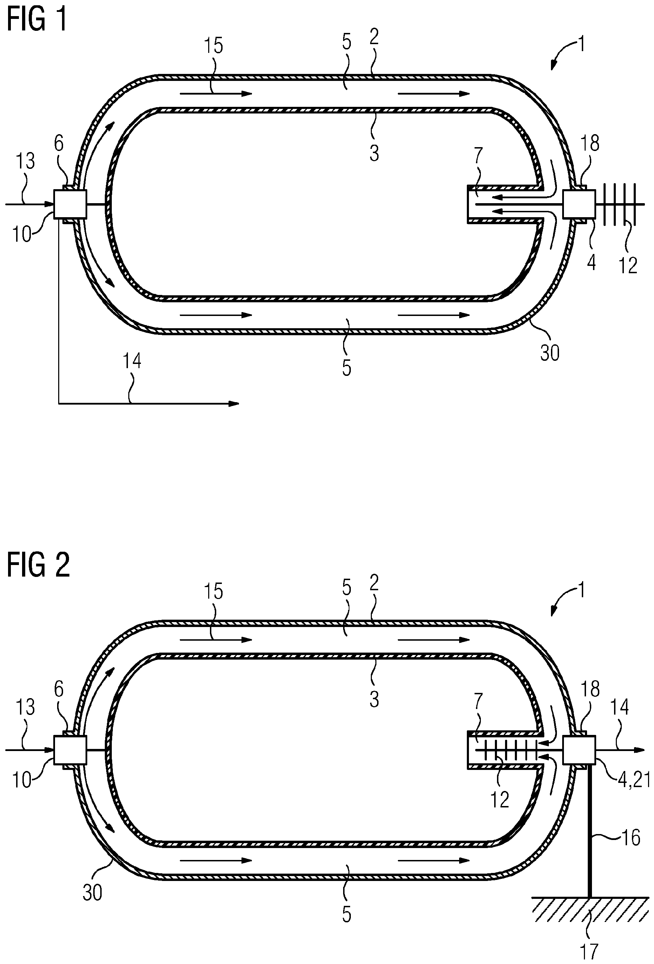

Figur 1 zeigt ein Gas-Tank-System 1 zu Speichern eines Gases. In diesem Ausführungsbeispiel ist das zu speichernde Gas Wasserstoff. Das Gas-Tank-System eignet sich aber ebenso für das Speichern von Methan und den Betrieb in Fortbewegungsmitteln mit Erdgas (CNG).

Das Gas-Tank-System 1 umfasst einen Tank 30 mit einer äußere Hülle 2 und eine innere Hülle 3. Zwischen der äußeren Hülle 2 und der inneren Hülle 3 ist ein Kanal 5 angeordnet. Die äußere Hülle 2 weist eine Einlass 6 auf. Als Einlass wird hier eine Öffnung in der äußeren Hülle bezeichnet. In diesem Einlass 6 ist eine Anschlussvorrichtung 10 angeordnet. Die innere Hülle 3 weist einen ersten Auslass 7 auf. Als erster Auslass wird hier eine Öffnung in der inneren Hülle 3 bezeichnet. An diesem ersten Auslass 7 ist eine Kühlvorrichtung 4 angeordnet. Die Kühlvorrichtung ragt über einen zweiten Auslass 18 in die Umgebung hinaus. Als zweiter Auslass 18 wird eine Öffnung in der äußeren Hülle 2 bezeichnet. Die Kühlvorrichtung 4 umfasst Kühlrippen 12. Die Anschlussvorrichtung 10 ist mit einer Betankungsleitung 13 verbunden. Die Anschlussvorrichtung 10 ist außerdem mit einer Entnahmeleitung 14 verbunden.

Die äußere Hülle 2 ist typischerweise eine gasdichte Hülle. Die innere Hülle 3 ist typischerweise eine hitzestabile Hülle. Die äußere Hülle 2 umfasst typischerweise harzgetränkte Kohlefasern. Dabei sorgen die Kohlefasern für die Druckstabilität die gesamte äußere Hülle für die Dichtheit. Die innere Hülle umfasst typischerweise ein hitzebeständiges Polymer, insbesondere ein Fluorpolymer und/oder ein Kompositpolymer. Es sind aber ebenso Polyphenylensulfid (PPS), Polyetheretherketon (PEEK), Polyamidimid (PAI), Polysulfone (PSU), Polyphenylensulfon (PPSU), Polyethersulfon (PES), weitere Hochleistungsthermoplaste oder auch faserverstärkte Polymere geeignet. Entscheidend ist, dass die Kunststoffe die maximal auftretenden Temperaturen ohne Degradation überstanden werden.

Die in Figur 1 gezeigten Pfeile zeigen die Strömungsrichtung 15 des Wasserstoffs beim Befüllen des Tanks 30. Hier nicht dargestellt ist die Strömungsrichtung bei Entnahme des Wasserstoffs aus dem Tank 30. Dann strömt der Wasserstoff in entgegengesetzter Richtung durch die Kanäle 5.

Der Wasserstoff wird bei einem Betankungsvorgang durch die Betankungsleitung 13 über den Einlass 6 in die Anschlussvorrichtung 10 geführt und von da auf die Kanäle 5 verteilt. Der Wasserstoff liegt typischerweise bereits gekühlt vor. Daher ist es vorteilhaft, die Anschlussvorrichtung 10 thermisch zu isolieren. Somit strömt gekühlter Wasserstoff durch die Kanäle 5 über den ersten Auslass 7 aus dem Kanal 5 in das Innere der inneren Hülle 3.

Die Kompressionswärme beim Betanken des Tanks entsteht insbesondere im Inneren der inneren Hülle 3 und insbesondere zu Beginn des Betankungsvorgangs. Ein Vorteil des Aufbaus gemäß des Ausführungsbeispiels ist, dass durch den Kanal 5 kühler Wasserstoff in das Tanksystem hineinströmt und eine kühlende Wirkung auf die innere Hülle 3 und die äußere Hülle 2 hat. Somit kann eine Überhitzung der äußeren Hülle 2 durch den kühlen Wasserstoff, der durch diesen Kanal 5 strömt, verhindert werden.

Die Entnahme des Wasserstoffs aus dem Inneren der inneren Hülle 3 erfolgt in umgekehrter Richtung. Der Wasserstoff strömt also darum durch die Kanäle 5 zurück zur Anschlussvorrichtung 10 wo er durch die Entnahmeleitung 14 aus dem Tank entnommen werden kann. Der Wasserstoff wird insbesondere bei der Entnahme aus dem Tank 30 mittels der Kühlvorrichtung 4 gekühlt, um die Temperatur an der äußeren Hülle 2 gering zu halten. Der zweite Auslass 18 dient hier demnach ausschließlich zur Wärmeentnahme aus dem Tank 30.

Ein weiterer Vorteil besteht darin, dass die Kühlvorrichtung 4 am ersten Auslass 7 bei der Entnahme des Wasserstoffs aus dem Inneren des Tanks 30 den Wasserstoff kühlt, bevor er mit der äußeren Hülle 2 in Kontakt kommen kann. Die Kühlvorrichtung 4 kann dabei klein ausgeführt werden, da die Entnahme des Wasserstoffs mit geringen Volumenströmen durchgeführt wird.

Ein weiterer Vorteil des Aufbaus des Ausführungsbeispiels besteht darin, dass das Volumen des Kanals 5 auch als Tankvolumen zu Verfügung steht, wodurch nahezu das gesamte Tankvolumen zur Verfügung steht.

Figur 2 zeigt eine alternative Anordnung des Gastanksystems 1. Insbesondere die Anordnung der Entnahmeleitung 14 unterscheidet sich vom ersten Ausführungsbeispiel. Die Entnahmeleitung 14 ist in diesem Ausführungsbeispiel gegenüberliegend zum Einlass 6 in der äußeren Hülle 2 angeordnet. Gas-Tank-System 1 umfasst einen Tank 30 mit einer äußere Hülle 2 und eine innere Hülle 3. Zwischen der äußeren Hülle 2 und der inneren Hülle 3 ist ein Kanal 5 angeordnet. Die äußere Hülle 2 weist eine Einlass 6 auf. Als Einlass wird hier eine Öffnung in der äußeren Hülle bezeichnet. In diesem Einlass 6 ist eine Anschlussvorrichtung 10 angeordnet. Die Anschlussvorrichtung 10 ist mit einer Betankungsleitung 13 verbunden.

Die innere Hülle 3 weist einen ersten Auslass 7 auf. Als erster Auslass wird hier eine Öffnung in der inneren Hülle 3 bezeichnet. An diesem ersten Auslass 7 ist eine Kühlvorrichtung 4 angeordnet. Die Kühlvorrichtung 4 ist über den zweiten Auslass 18 mit der Umgebung des Tanks 30 verbunden. In diesem Ausführungsbeispiel befindet sich neben der Kühlvorrichtung 4 auch eine zweite Anschlussvorrichtung 21 in dem zweiten Auslass 18. Diese zweite Anschlussvorrichtung 21 ist mit der Entnahmeleitung 14 verbunden.

Die Kühlvorrichtung 4 umfasst in diesem Ausführungsbeispiel wiederum Kühlrippen 12. Allerdings sind die Kühlrippen 12 in diesem Ausführungsbeispiel innerhalb des Kanals 5 angeordnet. Es ist ebenso denkbar, aber hier nicht gezeigt, dass die Kühlrippen sowohl innerhalb des Kanals 5 als auch außerhalb des Tanks 30 in der Umgebung angeordnet sind. Die Kühlvorrichtung 4 ist in diesem Beispiel über eine Wärmeleitungsvorrichtung 16 fest mit einem massiven Bauteil 17 des Fortbewegungsmittels verbunden. Das Fortbewegungsmittel ist insbesondere ein Zug. Vorteilhaft kann somit Wärme über das massive Bauteil abgeleitet werden. Die Kühlvorrichtung 4 selbst kann somit sehr klein gestaltet werden.

Das Befüllen des Tanks 30 erfolgt analog zum ersten Ausführungsbeispiel: der Wasserstoff wird über die Betankungsleitung 13 in die Anschlussvorrichtung 10 gegeben und von da aus über die Kanäle 5 in das Innere der inneren Hülle 3 geführt. Bei der Entnahme des Wasserstoffs aus dem Tank 30 wird dieser nun aber nicht durch die gesamten Kanäle 5 zurückgeführt, sondern direkt über die zweite Anschlussvorrichtung 21 in die Entnahmeleitung 14 geführt. Der Wasserstoff wird bei der Entnahme bereits im Kanal 5 gekühlt. Es ist aber ebenso denkbar, den Wasserstoff ausschließlich über das Ableiten der Wärme an das massive Bauteil 17 über die Wärmeübertragungsvorrichtung 16 zu kühlen, da der Wasserstoff in diesem Ausführungsbeispiel beim Entnehmen nicht mit der äußeren Hülle 2 in Berührung kommt und somit höhere Temperaturen als im ersten Ausführungsbeispiel möglich sind.

Die erste Anschlussvorrichtung 10 und die zweite Anschlussvorrichtung 21 können vorteilhaft insbesondere Filter, automatische Verschlussventile und/oder temperaturaktivierte Entspannungsventile umfassen. Diese sind insbesondere bei Tankbehälterlängen größer als 1,65 m nötig, da hier ein Feuertest (engl.: Bon-Fire-Test) durchgeführt werden sollte, welcher die aufgeführten Sensoren benötigt.

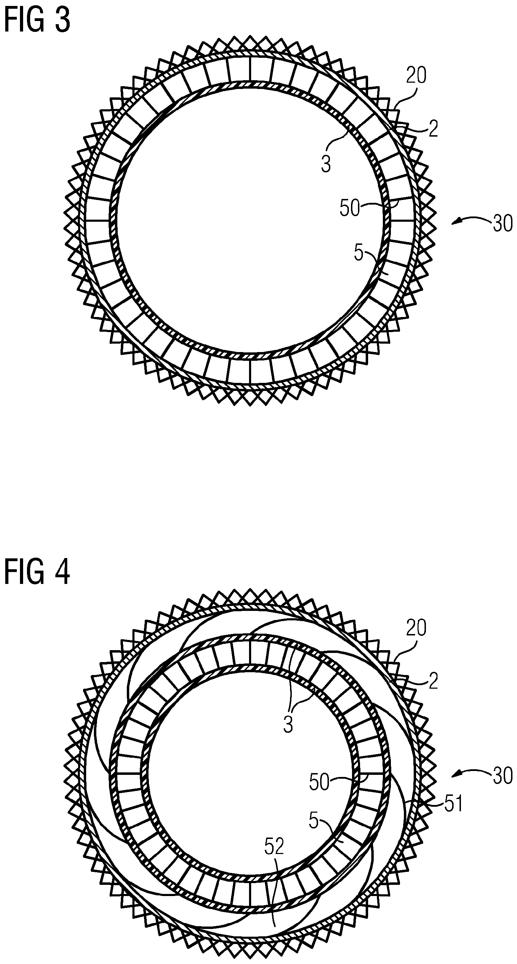

Figur 3 zeigt einen Querschnitt des Tanks 30. Die äußere Hülle 2 ist von Fasermaterial 20 umgeben. Die innere Hülle 3 befindet sich innerhalb der äußeren Hülle 2. Zwischen der inneren Hülle 3 und der äußeren Hülle 2 sind die Kanäle 5 angeordnet. In diesem Ausführungsbeispiel ist der Zwischenraum zwischen den beiden Hüllen durch eine Vielzahl von Kanalstegen 50 unterteilt, wodurch eine Vielzahl von Kanälen 5 gebildet werden. Vorteilhaft wird so die Strömung des Wasserstoffs bei der bei dem Befüllen des Tanks 30, für das Gas-Tank-System des ersten und zweiten Ausführungsbeispiel und bei der Entnahme des Wasserstoffs für den Fall des ersten Ausführungsbeispiels, beeinflusst. Die Kanalstege 50 können parallel zur Hauptachse des Tanks 30 angeordnet sein. Die Kanalstege können insbesondere gerade, wellenförmig oder gezackt ausgeführt sein.

Figur 4 zeigt ein weiteres Ausführungsbeispiel des Tanks 30 im Querschnitt. In diesem Beispiel sind zwei innere Hüllen 3 in der äußeren Hülle 2 angeordnet. Somit wird vorteilhaft die äußere Hülle 2 von einem größeren Kanalsystem von Hitze abgeschirmt. In diesem Ausführungsbeispiel sind in dem inneren Kanalsystem Kanalstege 50 analog zum Ausführungsbeispiel der Figur 3 angeordnet. Im äußeren Kanalsystem 52 sind gebogene Kanalstege 51 angeordnet. Diese erstrecken sich schneckenförmig um die zentrale Achse des Tanks 30. In anderen Worten umgeben sie die Tankmitte gewindeartig.

### Bezugszeichenliste

- 1: Gas-Tank-System
- 2: äußere Hülle
- 3: innere Hülle
- 4: Kühlvorrichtung
- 5: Kanal
- 6: Einlass
- 7: erster Auslass
- 10: Anschlussvorrichtung
- 12: Kühlrippen
- 13: Betankungsleitung
- 14: Entnahmeleitung
- 15: Strömungsrichtung Befüllen des Tanks
- 16: Wärmeleitungsvorrichtung
- 17: massives Bauteil des Fortbewegungsmittels
- 18: zweiter Auslass
- 20: Fasermaterial
- 21: zweite Anschlussvorrichtung
- 30: Tank
- 50: gerader Kanalsteg
- 51: gebogener Kanalsteg
- 52: äußeres Kanalsystem

## Patentansprüche

1. Gas-Tank-System (1) für den Einsatz in einem Fortbewegungsmittel umfassend:
- eine gasdichte äußere Hülle (2),
- wenigstens eine darin angeordnete innere hitzebeständige Hülle (3) innerhalb welcher das Gas gespeichert werden kann,
- wenigstens einen Kanal (5), wobei der Kanal (5) zwischen der äußeren (2) und der inneren Hülle (3) angeordnet ist und durch die innere (2) und die äußere Hülle (3) begrenzt wird und wobei die äußere Hülle (2) einen Einlass (6) zur Aufnahme des Gases in den Kanal (5) und die innere Hülle (3) einen ersten Auslass (7) zum Führen des Gases in die innere Hülle (3) aufweist, **dadurch gekennzeichnet, dass** an dem ersten Auslass (7) eine Kühlvorrichtung (4) angeordnet ist.

2. Gas-Tank-System (1) nach Anspruch 1, wobei der Gas-Tank ein Wasserstoff-Tank ist.

3. Gas-Tank-System (1) nach einem der vorhergehenden Ansprüche, wobei die innere hitzebeständige Hülle (3) aus einem ersten Material umfassend ein Fluorpolymer und/oder ein Kompositpolymer ausgebildet ist.

4. Gas-Tank-System (1) nach einem der vorhergehenden Ansprüche, wobei die äußere Hülle (2) eine Ummantelung umfassend Kunststoff und ein diese Ummantelung umgebendes Fasermaterial (20) aufweist.

5. Gas-Tank-System (1) nach einem der vorhergehenden Ansprüche, wobei die äußere Hülle (2) einen zweiten Auslass (18) zur Entnahme des Gases für eine Nutzung aufweist.

6. Gas-Tank-System (1) nach einem der vorhergehenden Ansprüche, wobei der Einlass (6) und der erste Auslass (7) in axialer Richtung der Hüllen gegenüberliegend angeordnet sind.

7. Gas-Tank-System (1) nach einem der Ansprüche 5 oder 6, wobei der Einlass (6) und der zweite Auslass (18) in axialer Richtung der Hüllen gegenüberliegend angeordnet sind.

8. Gas-Tank-System (1) nach einem der Ansprüche 5 oder 6, wobei der Einlass (6) und der zweite Auslass (18) in axialer Richtung der Hüllen auf derselben Seite angeordnet sind.

9. Gas-Tank-System (1) nach einem der vorhergehenden Ansprüche, wobei der Einlass (6) zur Aufnahme des Gases in den Kanal (5) thermisch isoliert ist.

10. Gas-Tank-System (1) nach einem der Ansprüche 7 oder 9, wobei die Kühlvorrichtung (4) mit dem ersten (7) und dem zweiten Auslass (18) verbunden ist.

11. Gas-Tank-System (1) nach einem der vorhergehenden Ansprüche, wobei die Kühlvorrichtung (4) als wärmeleitender massiver Stab oder als ein Wärmerohr ausgestaltet ist.

12. Gas-Tank-System (1) nach einem der vorhergehenden Ansprüche mit wenigstens zwei inneren Hüllen (3) und wenigstens zwei sich zwischen den Hüllen ausbildenden Kanälen (5).

13. Wasserstoffbetriebener Zug mit einem Gas-Tank-System (1) gemäß einem der Ansprüche 1 bis 12.

14. Wasserstoffbetriebener Zug nach Anspruch 13, wobei das Gas-Tank-System (1) eine Kühlvorrichtung (4) mit wärmeleitenden Komponenten umfasst, welche mit dem Zug verbunden sind.

15. Verfahren zum Betreiben eines Gas-Tank-Systems (1) mit folgenden Schritten:
- Bereitstellen eines Gas-Tank-System (1) für den Einsatz in einem Fortbewegungsmittel umfassend eine gasdichte äußere Hülle (2), wenigstens eine darin angeordnete innere hitzebeständige Hülle (3) innerhalb welcher das Gas gespeichert werden kann, einen Kanal (5), wobei der Kanal (5) zwischen der äußeren (2) und der inneren Hülle (3) angeordnet ist und durch die innere (2) und die äußere Hülle (3) begrenzt wird und wobei die äußere Hülle (3) einen Einlass (6) zur Aufnahme des Gases in den Kanal (5) und die innere Hülle (3) einen ersten Auslass (7) zum Führen des Gases in die innere Hülle (3) aufweist, wobei am ersten Auslass (7) des Kanals (5) eine Kühlvorrichtung (4) angeordnet ist.
- Führen des Gases in den Tank (30) durch den Kanal (5), wobei sich das Gas in der inneren Hülle (3) aufgrund des steigenden Druckes erwärmt,
- Speichern des Gases,
- Entnehmen des Gases durch den ersten Auslass (7), wobei das Gas in der Kühlvorrichtung (4) abgekühlt wird.

## Claims

1. Gas tank system (1) for use in a means of transport comprising:
- a gas-tight outer shell (2),
- at least one heat-resistant inner shell (3) arranged therein, within which the gas can be stored,
- at least one channel (5), wherein the channel (5) is arranged between the outer (2) and the inner shell (3) and is delimited by the inner (2) and the outer shell (3) and wherein the outer shell (2) has an inlet (6) for receiving the gas in the channel (5) and the inner shell (3) has a first outlet (7) for guiding the gas into the inner shell (3), **characterised in that** a cooling apparatus (4) is arranged at the first inlet (7) .

2. Gas tank system (1) according to claim 1, wherein the gas tank is a hydrogen tank.

3. Gas tank system (1) according to one of the preceding claims, wherein the heat-resistant inner shell (3) is formed from a first material comprising a fluoropolymer and/or a polymer composite.

4. Gas tank system (1) according to one of the preceding claims, wherein the outer shell (2) has a cladding comprising plastic and a fibre material (20) surrounding this cladding.

5. Gas tank system (1) according to one of the preceding claims, wherein the outer shell (2) has a second outlet (18) for removing the gas for use.

6. Gas tank system (1) according to one of the preceding claims, wherein the inlet (6) and the first outlet (7) are arranged in the axial direction opposite the shells.

7. Gas tank system (1) according to one of claims 5 or 6, wherein the inlet (6) and the second outlet (18) are arranged in the axial direction opposite the shells.

8. Gas tank system (1) according to one of claims 5 or 6, wherein the inlet (6) and the second outlet (18) are arranged in the axial direction on the same side as the shells.

9. Gas tank system (1) according to one of the preceding claims, wherein the inlet (6) is thermally insulated for receiving the gas in the channel (5).

10. Gas tank system (1) according to one of claims 7 or 9, wherein the cooling apparatus (4) is connected to the first (7) and the second outlet (18).

11. Gas tank system (1) according to one of the preceding claims, wherein the cooling apparatus (4) is configured as a thermally conductive solid rod or as a heat pipe.

12. Gas tank system (1) according to one of the preceding claims with at least two inner shells (3) and at least two channels (5) forming between the shells.

13. Hydrogen-powered train with a gas tank system (1) according to one of claims 1 to 12.

14. Hydrogen-powered train according to claim 13, wherein the gas tank system (1) comprises a cooling apparatus (4) with thermally conductive components which are connected to the train.

15. Method for operating a gas tank system (1) with the following steps:
- providing a gas tank system (1) for use in a means of transport comprising a gas-tight outer shell (2), at least one heat resistant inner shell (3) arranged therein, within which the gas can be stored, a channel (5), wherein the channel (5) is arranged between the outer (2) and the inner shell (3) and is delimited by the inner (2) and the outer shell (3) and wherein the outer shell (3) has an inlet (6) for receiving the gas in the channel (5) and the inner shell (3) has a first outlet (7) for guiding the gas into the inner shell (3), wherein a cooling apparatus (4) is arranged at the first outlet (7) of the channel (5).
- feeding the gas into the tank (30) by way of the channel (5), wherein the gas in the inner shell (3) is heated as a result of the increasing pressure,
- storing the gas,
- removing the gas by way of the first outlet (7), wherein the gas is cooled in the cooling apparatus (4).

## Revendications

1. Système de réservoir à gaz à utiliser dans un moyen de locomotion comprenant :
- une enveloppe (2) extérieure étanche au gaz,
- au moins une enveloppe (3) intérieure résistant à la chaleur, qui y est disposée à l'intérieur et dans laquelle le gaz peut être emmagasiné,
- au moins un conduit (5), le conduit étant disposé entre l'enveloppe (2) extérieure et l'enveloppe (3) intérieure et étant délimité par l'enveloppe (2) intérieure et par l'enveloppe (3) extérieure, et dans lequel l'enveloppe (2) extérieure a une entrée (6) pour la réception du gaz dans le conduit (5) et l'enveloppe (3) intérieure a une première sortie (7) pour conduire le gaz dans l'enveloppe (3) intérieure, **caractérisé en ce qu'**un système (4) de refroidissement est disposé sur la première sortie (7).

2. Système (1) de réservoir à gaz suivant la revendication 1, dans lequel le réservoir à gaz est un réservoir à hydrogène.

3. Système (1) de réservoir à gaz suivant l'une des revendications précédentes, dans lequel l'enveloppe (3) intérieure résistante à la chaleur est en un premier matériau comprenant un polymère fluoré et/ou un polymère composite.

4. Système (1) de réservoir à gaz suivant l'une des revendications précédentes, dans lequel l'enveloppe (2) extérieure a un chemisage comprenant de la matière plastique et un matériau (20) en fibre entourant ce chemisage.

5. Système (1) de réservoir à gaz suivant l'une des revendications précédentes, dans lequel l'enveloppe (2) extérieure a une deuxième sortie (18) pour prélever du gaz en vue d'une utilisation.

6. Système (1) de réservoir à gaz suivant l'une des revendications précédentes, dans lequel l'entrée (6) et la première sortie (7) sont disposées de manière opposée dans la direction axiale des enveloppes.

7. Système (1) de réservoir à gaz suivant l'une des revendications 5 ou 6, dans lequel l'entrée (6) et la deuxième sortie (18) sont disposées de manière opposée dans la direction axiale des enveloppes.

8. Système (1) de réservoir à gaz suivant l'une des revendications 5 ou 6, dans lequel l'entrée (6) et la deuxième sortie (18) sont disposées du même côté dans la direction axiale des enveloppes.

9. Système (1) de réservoir à gaz suivant l'une des revendications précédentes, dans lequel l'entrée (8) est isolée thermiquement pour la réception du gaz dans le conduit (5).

10. Système (1) de réservoir à gaz suivant l'une des revendications 7 ou 9, dans lequel le système (4) de refroidissement communique avec la première (7) et la deuxième sorties (18).

11. Système (1) de réservoir à gaz suivant l'une des revendications précédentes, dans lequel le système (4) de refroidissement est conformé en barre pleine conductrice de la chaleur ou en caloduc.

12. Système (1) de réservoir à gaz suivant l'une des revendications précédentes, comprenant au moins deux enveloppes (3) intérieures et au moins deux conduits (5) constitués entre les enveloppes.

13. Train fonctionnant à l'hydrogène, ayant un système (1) de réservoir à gaz suivant l'une des revendications 1 à 12.

14. Train fonctionnant à l'hydrogène suivant la revendication 13, dans lequel le système (1) de réservoir à gaz comprend un système (4) de refroidissement ayant des éléments conducteurs de la chaleur, qui sont reliés au train.

15. Procédé pour faire fonctionner un système (1) de réservoir à gaz par les stades suivants :
- on se procure un système (1) de réservoir à gaz à utiliser dans un moyen de locomotion comprenant une enveloppe (2) extérieure étanche au gaz, au moins une enveloppe (3) intérieure résistant à la chaleur, qui y est disposée à l'intérieur et dans laquelle le gaz peut être emmagasiné, au moins un conduit (5), le conduit étant disposé entre l'enveloppe (2) extérieure et l'enveloppe (3) intérieure et étant délimité par l'enveloppe (2) intérieure et par l'enveloppe (3) extérieure et dans lequel l'enveloppe (2) extérieure a une entrée (6) pour la réception du gaz dans le conduit (5) et l'enveloppe (3) intérieure a une première sortie (7) pour conduire le gaz dans l'enveloppe (3) intérieure, dans lequel un système (4) de refroidissement est disposé à la première sortie (7) du conduit (5),
- on envoie le gaz dans le réservoir (30) par le conduit (5), le gaz se réchauffant dans l'enveloppe (3) intérieure en raison de la pression croissante,
- on stocke le gaz,
- on évacue le gaz par la première sortie (7), le gaz étant refroidi par le système (4) de refroidissement.
